# EUROPEAN PATENT SPECIFICATION

(11) **EP 0 373 171 B1**
(45) Date of publication and mention of the grant of the patent: **04.08.1993**
(21) Application number: 88904520.9
(22) Date of filing: 18.05.1988
(51) Int. Cl.: H04Q 11/04

(54) **SWITCHING ELEMENT FOR PCM SIGNALS**
VERMITTLUNGSELEMENT FÜR PCM-SIGNALE
ELEMENT DE COMMUTATION POUR SIGNAUX PCM (MODULATION PAR IMPULSIONS CODEES)

(30) Priority: 29.06.1987 IT 2110187
(43) Date of publication of application: 20.06.1990
(73) Proprietor: ITALTEL TELEMATICA S.p.A., 81055 Santa Maria Capua Vetere (Caserta) (IT)
(72) Inventor: DANNA, Roberto, I-20092 Cinisello Balsamo (IT); DI GIULIANO, Sabatino, I-74100 Taranto (IT)
(74) Representative: Giustini, Delio
(86) International application number: EP8800439
(87) International publication number: WO8900371

(56) References cited:
- DE-A- 2 743 854
- GB-A- 1 458 526
- Review of the Electrical Communication Laboratory, vol. 16, nos. 3-4, March-April 1968, (Tokyo, JP), K. Habara et al.: "Speech-path network of DEX-T1 switching system", pages 265-284

## Description

The present invention refers to a switching element for PCM signals, so shaped as to be easily integrated in a semicustom technology. More in particular it regards an element suitable to carry out switching operations, in particular in peripheral units in a private branch exchange.

The Italian patent No. 1.198.166 (corresponding to the published International Application WO88/04123) describes a private branch exchange (PABX = Private Automatic Branch Exchange) which comprises a plurality of centralized units and a plurality of peripheral units.

The switching operations of the audio signals are performed in the centralized units, while the signal switching (for example, tone sending, multifrequency signals reception, etc.) are performed in the peripheral units, that are referred to as "line units" because they represent functional units to which a predetermined number of users' lines are joined.

The switching elements for PCM signals are well-known - they are executed according to a "custom" technology - and are suitable to switch - without any block - 256 incoming PCM channels out of 256 outgoing PCM channels. Said elements have a high switching capacity and they are therefore particularly expensive, being their use justified only in the centralized means of the exchange, as their capacity is there fully exploited. The use of said elements in the peripheral means of the exchange (line unit) is not justified from an economical point of view because of the reduced number of switching operations that are required.

According to a preferential embodiment of the invention, 16 user lines are joined to said line units and the number of the switching operations to be performed by the peripheral means (16 operations) is therefore by far inferior to the switching capacity of said known elements (256 operations).

Within a private branch exchange of the present type, the above peripheral elements present a high degree of repetitiveness and in order to limit costs and dimensions of the switching element it is necessary to integrate it in a single chip, of a semicustom technology for example.

As known, said technology provides the integration of a single silicon chip of a predetermined number of transistors which corresponds to a predetermined number of gate-equivalent (for example 12.000 transistors correspond to 3000 gate-equivalent). Any functional unit executed according to said technology requires connections among said gate-equivalent in order to implement the electric functions that are there arranged.

It is herein underlined that the switching elements of known type are not suitable to be implemented according to a semicustom technology, due to the fact in particular that the switching operations - both time and space ones - for PCM signals are performed through a writing/reading operation of said signals in a memory unit having a high capacity. As known, the implementation of memory cells according to a semicustom technology requires a large number of gate-equivalent and - even if an underscaling of said memory unit is effected in order to allow the performance of a reduced number of switching operations - it is impossible to use the semicustom technology in order to execute an operating switching element according to those principles on the basis of which said known elements operate.

Purpose of the present invention is a switching unit for PCM signal, so shaped as to comprise the electrical functions which require a reduced number of gate-equivalent according to a semicustom technology.

To this end, the switching operations for PCM signals in the unit object of the present invention are effected through a plurality of switching elements suitable to cause a time switching as well as through a multiplexer unit suitable to cause a space switching. As said switching cells fundamentally arrange the presence of multiplexer and registers which can be implemented through a limited number of gate-equivalent, the unit fully meeets the requirements of the present invention.

Are known in the art (for example from DE-A-2.743.854) time/space switching devices comprising a plurality of time switching units, one or more space switching units and a control unit.

Both the time switching units and the space switching units comprises reading/writing memories (AS₁, AS₂; AS₃, AS₄) and cannot be implemented through a semicustom technology, as discussed above.

Object of the present invention is therefore a switching unit for PCM signals, implemented without reading/writing memories and suitable to receive at its input a plurality of PCM groups and to switch in the same frame a predetermined number of bytes allocated in the time channels of said PCM input groups to the time channels of the PCM output group.

The switching unit comprises:
- X time switching cells, where X represents the maximum number of switching operations that can be performed in the same frame, suitable to receive said PCM input groups, further suitable to select the PCM group and channel to be switched;
- a first multiplexer suitable to receive at its input the outputs of the X switching cells and further suitable to transfer to the output the byte selected by the switching cell corresponding to a digital word applied to its own control input;
- control means, suitable to send to each switching cell a first digital word which expresses the PCM group and channel to be switched as well as a second digital word expressing the time channel to be scanned operation at the considered time, and further suitable to send a third digital word to the control input of said multiplexer.

Further characteristics of the unit can be taken from the following description which refers to a non-limiting example shown in the following drawings, whereas:
- Figure 1 shows the block diagram of the switching element according to the invention;
- Figure 2 shows in details a switching cell CC of Fig. 1.

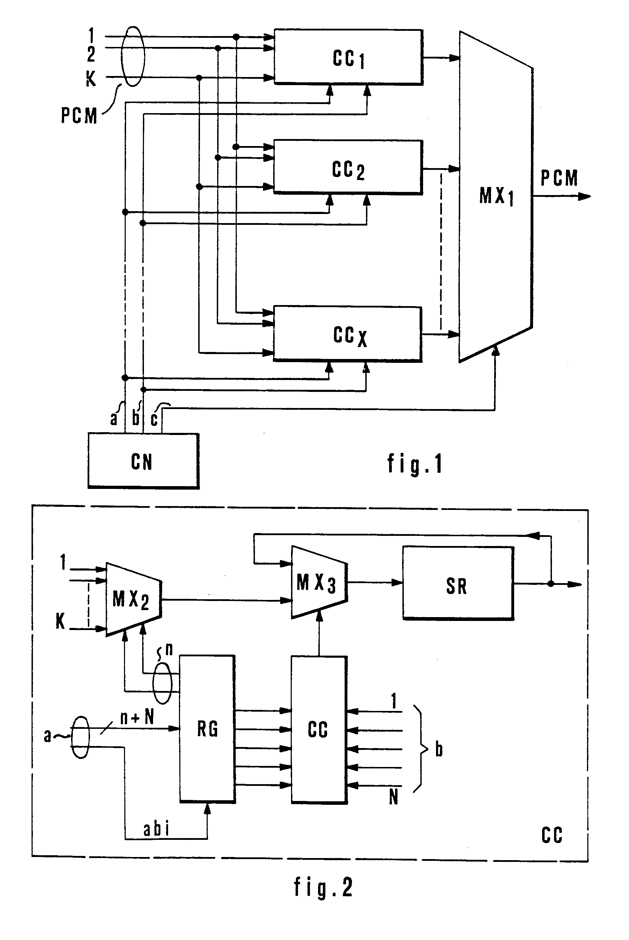

In the switching element of Fig. 1, the K PCM input groups are joined to a plurality of switching cells CC₁,...,CC_{X} in a number which corresponds to the maximum possibile switching operations in a frame of the PCM signal. Each switching cell is therefore suitable to select a PCM group and channel to be switched as well as to perform a time switching of the byte allocated in the selected channel.

The X outputs of said cells reach the input of a multiplexer MX₁ fit to determine a space switching of the PCM channels by drawing each time the byte corresponding to the digital word applied to its control input and by allocating it in the outgoing PCM group.

The selection operations performed by the single switching cells CC as well as those ones carried out by the unit MX₁ are monitored by control means CN which are suitable to arrange:
- at an output a a first digital word which expresses the PCM channel and group to be switched;
- at an output b a second digital word which expresses the time channel at the considered time;
- at an output c a third digital word adapted to monitor the switching operations of the multiplexer unit MX₁.

The operation of the circuit arrangement as herein described and shown in Figure 1 is clearer from the description of a switching cell CC shown in Figure 2, where the K PCM groups which come to each switching cell are joined to the input of a multiplexer MX₂.

According to a preferential embodiment, the numer K is equal to four and the unit MX₂ can therefore receive a word of n = 2 Bits at its control input. The control circuit CN makes in fact available a release signal abi at this first output a as well as a digital word corresponding to n + N = seven Bits that is memorized in a register RG when the signal abi is activated.

The two most significant Bits of said word from the address Bits of the unit MX₂, to the output of which the PCM group, where the channel to be switched is allocated, corresponds.

The PCM group which is selected as above specified comes to an additional multiplexer MX₃, which is in turn addressed by the bit corresponding to the output of a comparison circuit CC. This latter receives the less significant Bits of the digital word memorized in the register RG at an input and the digital word, available at the output b of the control circuit CN, at the other input.

As the binary configurations suitable to the scanning of 32 channels of the PCM group are available at the output b, when the coincidence among the digital words applied to the inputs of the unit CC occurs, this latter operates its own output and enables the multiplexer MX₃ to transfer to its own output the content of the time channel which is destinated to be switched by the switching cell and which corresponds to the digital word memorized in the register RG.

The byte so selected is transferred into a shift register SR and through the multiplexer MX₃ it is recirculated in the unit SR as long as necessary in order to determine the time switching which is provided in the referenced connection.

Assuming that the byte is positioned in the time channel 3 of the group selected through MX₂ and that it should be allocated in the time channel 18 of the PCM group which corresponds to the output of MX₁, said byte is recirculated in the register SR for an interval of time equal to 15 time channels.

When said interval has elapsed, a digital word will correspond to the output c of the control means CN, suitable to cause the transfer to the output of MX₁ of the byte contained in the register SR of the switching cell CC₁ which has been considered.

On the basis of the above stated it is evident that the switching unit according to the present invention can perform the switching operations without using the memory cells that are at the base of said known elements. The switching cells arrange the time switching, while the multiplexer MX₁ provides the space switching.

Multiplexer and registers implemented according to the semi custom technology requires a limited number of gate-equivalent and execute the switching unit according to the invention.

## Claims

1. Switching unit for PCM signals, suitable to receive at the input a plurality of PCM groups as well as to switch in the same frame a predetermined number of bytes allocated in the time channels of said PCM input groups to the time channels of the PCM output group, said switching unit comprising X time switching cells (CC), where X represents the maximum possible of switching operations performed in the same frame, which are suitable to receive said PCM input groups; space switching means (MX₁) which receives the output signals of the switching cells and generate said PCM output group and control means (CN) controlling the switching cells and space switching means; said switching unit being characterized in that
- each switching cell (CC₁,...,CC_{X}) comprises
- a first multiplexer (MX₂) suitable to receive said PCM input groups;
- a register (RG) suitable to receive a first digital word coming from the control means when a release signal (abi) is activated and further suitable to forward the most significant bits of said word to the control input of the first multiplexer (MX₂);
- a comparison circuit (CC) suitable to activate its own output once the identity among the less significant bits of the digital word memorized in said register (RG) and the bits of a second digital word supplied by the control means (CN) is detected;
- a second multiplexer (MX₃) having the control input connected to the output of the comparison circuit (CC) and further having the first input connected to the output of the first multiplexer (MX₂);
- a shift register (SR) having its input connected to the output of the second multiplexer (MX₃) and further having the output connected to the output of the switching cell as well as to the second input of the second multiplexer (MX₃);
in that said space switching means comprises a third multiplexer (MX₁) suitable to receive at its input the outputs of the X switching cells (CC) and further suitable to transfer to the output the byte selected by the switching cell corresponding to the digital word applied to its control input;
and that said control means (CN) are suitable to forward to each switching cell (CC) a first digital word (output a) expressing the PCM channel and group to be switched as well as a second digital word (output b) expressing the time channel scanned at the time which has been considered and are further suitable to forward a third digital word (output c) to the control input of the third multiplexer (MX₁).

## Patentansprüche

1. Vermittlungseinheit für PCM-Signale, die geeignet ist, am Eingang eine Mehrzahl von PCM-Gruppen zu empfangen sowie auch im selben Rahmen eine vorabbestimmte Anzahl von Bytes, die sich in den Zeitkanälen der genannten PCM Eingangsgruppen befinden, an die Zeitkanäle der PCM Ausgangsgruppe Zu vermitteln; die besagte Vermittlungseinheit schliesst X-mal Vermittlungszellen (CC) ein, wobei X für eine höchstmögliche Anzahl von im selben Rahmen ausgeführten Vermittlungsvorgängen steht, welche geeignet sind, die genannten PCM Eingangsgruppen Zu empfangen; Raumvermittlungsvorrichtungen (MX1), welche die Ausgangssignale der Vermittlungszellen empfangen, und die genannte PCM-Ausgangsgruppe sowie die Kontrollvorrichtungen (CN), die die Vermittlungszellen und Raumvermittlungsvorrichtung kontrollieren, generieren; die genannte Vermittlungseinheit wird dadurch gekennzeichnet,
dass jede Vermittlungszelle (CC1,.., .CCX) folgende Elemente einschliesst:
- einen ersten für den Empfang besagter PCM-Eingangsgruppen geeigneten Multiplexer (MX2);
- einen Speicher (RG), der geeignet ist, ein erstes von der Kontrollvorrichtung ausgehendes Digitalwort zu empfangen, wenn ein Auslösungssignal (abi) aktiviert wird, und der ausserdem in der Lage ist, die signifikantesten Bits des besagten Wortes an den Kontrolleingang des ersten Multiplexers (MX2) weiterzuvermitteln;
- eine Vergleichsschaltkreis (CC), der in der Lage ist, seinen eigenen Ausgang zu aktivieren, sobald die Identität unter den weniger signifikanten Bits des im besagten Speicher (RG) registrierten Digitalwortes und der Bits eines zweiten von der Kontrollvorrichtung (CN) vermittelten Digitalwortes ermittelt ist;
- einen zweiten Multiplexer (MX3), dessen Kontrolleingang mit dem Ausgang des Vergleichsschaltkreises (CC) verbunden ist, und dessen erster Eingang darüber hinaus mit dem Ausgang des ersten Multiplexers (MX2) verbunden ist;
- einen Shiftspeicher (SR), dessen Eingang mit dem Ausgang des zweiten Multiplexers (MX3) verbunden ist, und dessen Ausgang sowohl mit dem Ausgang der Vermittlungszelle als auch mit dem zweiten Eingang des zweiten Multiplexers (MX3) verbunden ist;
dass die genannte Raumvermittlungsvorrichtung einen dritten Multiplexer (MX1) einschliesst, der in der Lage ist, an seinem Eingang die Ausgänge der X-mal Vermittlungszellen (CC) zu empfangen, und darüber hinaus das von der Vermittlungszelle, die dem in seinem Kontrolleingang eingespeiste Digitalwort entspricht, ausgewählte Byte an den Ausgang zu vermitteln;
und dass besagte Kontrollvorrichtungen (CN) geeignet sind, ein erstes Digitalwort (Ausgang a)mit Angabe des zu vermittelnde PCM Kanal sowie der Gruppe, und ein zweites Digitalwort (Ausgang b) mit Angabe des Zeitkanals, der zu einem in Betracht gezogenen Zeitpunkt fixiert ist, an jede Vermittlungszelle (CC) weiterzuleiten, und dass die genannten Kontrollvorrichtungen ferner geeignet sind, ein drittes Digitalwort (Ausgang c) an den Eingang eines dritten Multiplexers (MX1) zu vermitteln.

## Revendications

1. Unité de commutation pour signaux PCM, appropriée aussi bien à recevoir à l'entrée une pluralité de groupes PCM gu'à commuter dans la même structure un nombre prédéterminé de bytes affectés aux circuits de temps des dits groupes d'entrée PCM aux circuits de temps du groupe de sortie PCM, la dite unité de commutation comprend des X éléments de commutation (CC), X représentant le nombre maximal possible d'opérations de commutation effectuées dans la même structure, qui sont adaptées à recevoir les dits groupes d'entrée PCM; des dispositifs de commutation d'espace (MX1) recevant les signaux de sortie des éléments de commutation et générant le dit groupe de sortie PCM et le dispositif de contrôle (CN), qui contrôle les dites éléments de commutation et le dispositif de commutation d'espace; la dite unité de commutation caractérisée en ce que
chaque élément de commutation (CC1,..., CCX) comprend
- un premier multiplexeur (MX2) adapté à recevoir les dites groupes d'entrée PCM;
- une mémoire (RG) adaptée à recevoir une première parole digitale provenant du dispositif de contrôle, quand un signal de déclenchement (abi) est activé, et en plus à transmettre les bits les plus significatifs de la dite parole digitale à l'entrée de contrôle du premier multiplexeur (MX2);
- un circuit de comparaison (CC) adapté à activer sa propre sortie, une fois l'identité parmi les bits moins significatifs de la parole digitale mémorisée dans la dite mémoire (RG) et les bits d'une deuxième parole digitale fournie par le dispositif de contrôle soit détectée;
- un deuxième multiplexeur (MX3) ayant l'entrée de contrôle reliée à la sortie du circuit de comparaison (CC) et en plus ayant la premiere entrée reliée à la sortie du premier multiplexeur (MX2);
- une mémoire shift (SR) ayant son entrée reliée alla sortie du deuxième multiplexeur (MX3), et en plus ayant la sortie reliée à la sortie de l'élément de commutation ainsi qu' à la deuxième entrée du deuxième multiplexeur (MX3);
en ce que le dit dispositif de commutation d'espace comprend un troisième multiplexeur (MX1) adapté à recevoir à son entrée les sortie des X éléments de commutation (CC) et étant en plus adapté à transférer à la sortie le byte selectionné par l'élément de commutation correspondant à la parole digitale appliquée à son entrée;
et en ce que les dits dispositifs de contrôle (CN) sont adaptés à transmettre en avance à chaque élément de commutation (CC) une première parole digitale (sortie a) en indiquant le circuit et le groupe PCM où elle doit être commutée et une deuxième parole digitale (sortie b) en indiquant le circuit de temps scruté au temps considéré, et à transmettre une troisième parole digitale (sortie c) à l'entrée de contrôle du troisième multiplexeur (MX1).
